# EUROPÄISCHE PATENTSCHRIFT

(11) **EP 0 696 500 B1**
(45) Veröffentlichungstag und Bekanntmachung des Hinweises auf die Patenterteilung: **27.01.1999**
(21) Anmeldenummer: 95111549.2
(22) Anmeldetag: 22.07.1995
(51) Int. Cl.: B29C 47/00, B29C 70/14

(54) **Für die Aufnahme definierter Beanspruchungen bestimmter, stranggepresster Profilstab aus thermoplastischem Kunststoff**
Extruded profile bar made of thermoplastic material destined to resist predetermined loads
Barre profilée extrudée en matière thermoplastique destinée à résister à des contraintes mécaniques prédéterminées

(30) Priorität: 09.08.1994 DE 4428088
(43) Veröffentlichungstag der Anmeldung: 14.02.1996
(73) Patentinhaber: Technoform Caprano + Brunnhofer oHG, 34277 Fuldabrück (DE)
(72) Erfinder: Brunnhofer, Erwin, Ing., D-34277 Fuldabrück (DE)
(74) Vertreter: Honke, Manfred, Dr.-Ing.

(56) Entgegenhaltungen:
- EP-A- 0 468 306
- DE-A- 3 801 574
- DE-A- 4 016 427
- FR-A- 2 003 919
- FR-A- 2 256 022
- FR-A- 2 335 773
- GB-A- 2 096 533
- US-A- 3 350 485

## Beschreibung

Die Erfindung betrifft einen für die Aufnahme definierter Beanspruchungen bestimmten, stranggepreßten Profilstab aus thermoplastischem Kunststoff, dessen Profilquerschnitt quer zur Profilstablängsachse unter dem Einfluß der Beanspruchungen mechanische Hochspannungsbereiche und mechanische Niederspannungsbereiche ausbildet und der eine beim Strangpressen eingebrachte Langfaserbewehrung aus Fasern besitzt, die eine Länge im Bereich von 3 bis 20 mm und einen Elastizitätsmodul von zumindest 60.000 N/mm² aufweisen, wobei der Anteil der Langfaserbewehrung in dem thermoplastischen Kunststoff 30 bis 70 Masse % beträgt.

Bei den Spannungen kann es sich um Zugspannungen oder Druckspannungen handeln. Die Beanspruchungen können aus statischen Lasten resultieren und produzieren dann statische Spannungsverteilungen. Die Beanspruchungen können aber auch dynamischer Natur sein, z. B. aus Schwingungen, Stößen und Schlägen resultieren, und produzieren dann dynamische Spannungsverteilungen. Die Profilstäbe, auf die sich die Erfindung bezieht, sind z. B. Tragstäbe, die statisch Balken auf zwei Stützen, eingespannte Balken, Durchlaufträger, Torsionsträger und ähnliche Tragelemente sind. Sie sind statisch bestimmt oder statisch unbestimmt belastet oder gehören statisch bestimmten oder statisch unbestimmten Tragwerken und Systemen an. Die Beanspruchungen können in den Tragelementen auch Stabilitätsprobleme hervorrufen.

Ein Profilstab der eingangs genannten Art ist mit einer Langfaserbewehrung aus Fasern mit einer Länge von 0,2 bis 5 mm und einem Fasergehalt von 5 bis 45 Volumen % bekannt. (FR-A-2 335 773).

Nach der herrschenden Lehre, die für Profilstäbe aus thermoplastischem Kunststoff ebenso wie für Stahlprofilstäbe oder Profilstäbe aus anderen Metallen angewendet wird, werden die Profilstäbe nach Maßgabe der aufzunehmenden Beanspruchungen dimensioniert. Dazu gehört, daß unter Berücksichtigung des Elastizitätsmoduls der Werkstoffe die Flächenträgheitsmomente entsprechend eingerichtet werden. Die herrschende Lehre führt zu Profilstäben und damit zu Bauwerken, die, nach den Regeln der Ingenieurkunst errichtet, in statischer und stabilitätsmäßiger Hinsicht allen Anforderungen genügen. Die herrschende Lehre verlangt jedoch einen entsprechenden Werkstoffeinsatz, z. B. nicht unbeachtliche Wanddicken.

Der Erfindung liegt das technische Problem zugrunde, einen Profilstab aus thermoplastischem Kunststoff der erläuterten Zweckbestimmung zu schaffen, der bei vorgegebenen Belastungen einen beachtlichen geringeren Werkstoffeinsatz verlangt, - bei gleicher Festigkeit, Gestaltfestigkeit, Stabilität und Steifheit also leichter ausgeführt werden kann.

Die erfindungsgemäße Lösung dieser Aufgabe besteht darin, daß in dem Hochspannungsbereich oder in den Hochspannungsbereichen des Profilquerschnitts die Fasern der Faserbewehrung hauptsächlich in Längsrichtung des Profilstabes orientiert sind, wobei die Fasern eine Orientierung aufweisen, die, ausgedrückt durch den Wärmedehnungsquotienten aus der Wärmedehnung des Profilstabs in Längsrichtung im Zähler und der Wärmedehnung des Profilstabs in Querrichtung im Nenner, kleiner ist als 0,2 und daß durch Anwendung des Kühldüsenextrusionsverfahrens massemäßig eine ausreichend gleichmäßige Verteilung der Fasern im Profilquerschnitt fixiert ist.

Die Orientierung der Fasern kann auf bekannte Art und Weise erzeugt werden. Überraschenderweise zeigt bei einem erfindungsgemäßen Profilstab nach Maßgabe der Anisotropie der Faserorientierung auch der Elastizitätsmodul des Profilstabes eine entsprechende Anisotropie. Um unkontrollierten Faserbruch zu verhindern, wird zweckmäßigerweise mit Einschneckenextruder gearbeitet. Erfindungsgemäß können die Langfasern in Form von Pellets dem zu extrudierenden Kunststoff beigegeben werden. Sie sind in den Pellets unter Verwendung eines Binders entwirrbar vereinigt und entwirren sich in dem Extruder. Wo bei einem besonderen Profil oder einem besonderen Kunststoff nicht mit solchen Pellets gearbeiet werden kann oder soll und nach bevorzugter Ausführungsform der Erfindung ist die Langfaserbewehrung im Wege der Direktverarbeitung von Endlosfasern eingebracht (vgl. Truckenmüller, IKT "Direktverarbeitung von Endlosfasern ..." und DE 40 16 784 C2, DE 42 36 662 A1).

Die Erfindung nutzt die Tatsache, daß in einem Profilstab, der für die Aufnahme definierter Beanspruchungen bestimmt ist, die aus den Beanspruchungen resultierende Spannungsverteilung, insbesondere mit den modernen mathematischen Hilfsmitteln der technischen Mechanik, sehr genau ermittelt werden kann, wobei mechanische Hochspannungsbereiche und Niederspannungsbereiche abgrenzbar sind. Die Spannungsverteilung nimmt Einfluß auf die Festigkeit, die Gestaltfestigkeit, die Steifigkeit und die Stabilität. Die Erfindung beruht auf der Erkenntnis, daß bei der Herstellung von Profilstäben aus thermoplastischem Kunststoff in den Hochspannungsbereichen eine Faserbewehrung wohlorientiert und zur Aufname der Beanspruchungen angeordnet werden kann. Die Fasern der Faserbewehrung können z. B. als Zugspannungsbewehrung funktionieren. Der Werkstoffeinsatz in bezug auf den thermoplastischen Kunststoff kann in dem Bereich, in dem die Fasern der Faserbewehrung wohlorientiert angeordnet werden, beachtlich reduziert werden. Im Ergebnis sind erfindungsgemäße Profilstäbe bei gleicher Tragfähigkeit und Stabilität wesentlich leichter. - Wie man zu verfahren hat, um beim Strangpressen oder Extrudieren eines Profilstabes aus thermoplastischem Kunststoff eine Orientierung der Fasern im Profilstab zu bewirken, ist wohlbekannt. Durch die Induzierung von Dehnströmungen in der Schmelze bei der Formgebung des Profilstabes, lassen sich die Fasern der Faserbewehrung orientieren. Wenn diese Dehnströmung nur in Profillängsrichtung erzeugt wird, so orientieren sich auch die Fasern der Faserbewehrung bevorzugt in Längsrichtung. Wenn die Schmelzeführung so ist, daß auch quer zur Profillängsrichtung Dehnströmungen entstehen, so orientieren sich die Fasern der Faserbewehrung, bezogen auf die Profilstablängsachse, auch in Querrichtung. Einzelheiten für die erfindungsgemäße Gestaltung eines Profilstabs ermittelt der Fachmann leicht durch Probieren.

Im Rahmen der Erfindung kann mit den verschiedensten extrudierbaren thermoplastischen Kunststoffen gearbeitet werden. Die Erfindung lehrt, daß der thermoplastische Kunststoff vorzugsweise aus einem Werkstoff der Gruppe "Polyamid, Polypropylen" oder Mischungen davon oder aus einem Werkstoff der Gruppe "Polyethylenterephthalat" oder der Gruppe "Polybutylenterephtalat" oder Mischungen davon besteht. Die Fasern sind z. B. als Glasfasern, Kohlenstoffasern, Metallfasern oder Mischungen davon ausgewählt. Nach bevorzugter Ausführungsform der Erfindung werden Fasern verwendet, die einen Elastizitätsmodul von über 100.000 N/mm² aufweisen. Die Dicke der Fasern der Faserbewehrung liegt im Bereich von 5 bis 25 µm, vorzugsweise bei etwa 12 µm. Die Orientierung der Fasern in der Faserbewehrung in einem Profilstab aus Kunststoff kann theoretisch, z. B. in bezug auf die Profillängsachse, durch Winkelmessung an den einzelnen Fasern und Auszählen in Prozent ermittelt werden, wobei ein entsprechender zerstörender Abbau des Profilstabes vorsichtig durchgeführt werden muß. Diese gleichsam mikroskopische Zählmethode ist für die Praxis wenig geeignet. In der Praxis nutzt man die Tatsache, daß übliche Fasern einer Faserbewehrung in einem thermoplastischen Kunststoff eine geringere Wärmedehnung aufweisen als der Kunststoff selbst, und daß die Wärmedehnung eines solchen Profilstabes folglich von der Orientierung der Fasern im Profilstab abhängt. Man arbeitet daher zur Bestimmung der Faserlage in der Faserbewehrung mit dem sog. Wärmedehnungsquotienten, der definiert ist als Quotient aus der Wärmedehnung des Profilstabes in Längsrichtung im Zähler und der Wärmedehnung des Profilstabes in Querrichtung im Nenner. Ist der Quotient 1, so ist eine Orientierung nicht gegeben. Ist der Quotient z. B. 0,2, so ist die Orientierung in Längsrichtung um etwa einen Faktor 5 größer als in Querrichtung. In diesem Zusammenhang lehrt die Erfindung, daß in dem Hochspannungsbereich oder in den Hochspannungsbereichen die Fasern der Faserbewehrung eine Orientierung aufweisen, die, ausgedrückt durch den Wärmedehnungsquotienten aus der Wärmedehnung des Profilstabes in Längsrichtung im Zähler und der Wärmedehnung des Profilstabes in Querrichtung im Nenner vorzugsweise bei 0,12 liegt.

Im einzelnen kann ein erfindungsgemäßer Profilstab auf sehr unterschiedliche Weise gestaltet sein. Das gilt sowohl in bezug auf den Profilquerschnitt als auch in bezug auf die anderen geometrischen Maße, einschließlich der Durchmesser und Wanddicken. Bei einem Profilstab, dessen Profilquerschnitt quer zur Profilstablängsachse zumindest einen Steg und zumindest einseitig an den Steg angeformte Flansche und bei klassischer Biegung im Steg eine neutrale Zone aufweist, z. B. bei Profilstäben mit I-, T-, 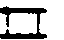 -Querschnitt, lehrt die Erfindung, daß die durch den Wärmedehnungsquotienten ausgedrückte Orientierung der Fasern in den Flanschen im Bereich von 0,12 bis 0,2 und im Bereich der Stege, zur neutralen Zone hin, etwa 0,25 bis 0,5 beträgt.

Im Rahmen der Erfindung liegen auch Profilstäbe, die zusätzliche Funktionen erfüllen, deren Profilquerschnitt z. B. quer zur Längsachse Funktionsausformungen, z. B. leistenförmig längslaufende Führungsvorsprünge oder Befestigungsvorsprünge aufweist. Nach der Lehre der Erfindung liegt im Bereich der Funktionsausformungen die durch den Wärmedehnungsquotienten ausgedrückte Orientierung der Fasern im Bereich von 0,2 bis 0,5.

Die erfindungsgemäßen Profilstäbe können jeden beliebigen Querschnitt aufweisen und sowohl sogenannte Massivprofile als auch Hohlprofile sein. Handelt es sich um die Ausführungsform als Hohlprofil, so lehrt die Erfindung, daß der Profilquerschnitt aus zwei verschweißten Halbprofilen zusammengesetzt ist, und daß in diesem Bereich die durch den Wärmedehnungsquotienten ausgedrückte Orientierung der Fasern ebenfalls im Bereich 0,25 bis 0,5 liegt. In dieser Lehre kommt zum Ausdruck, daß die Schweißnähte bei einem erfindungsgemäßen Profilstab zweckmäßigerweise nicht in einem Hochspannungsbereich angeordnet werden. Vorzugsweise weisen bei einem erfindungsgemäßen Profilstab die Fasern eine Länge auf, die im Bereich von 3 bis 20 mm liegt. Es können jedoch in der Gesamtfasermenge etwa 25 % Fasern enthalten sein, die kürzer als 3 mm und/oder länger als 20 mm sind.

Im folgenden wird die Erfindung anhand einer lediglich ein Ausführungsbeispiel darstellenden Zeichnung ausführlicher erläutert. Es zeigen in schematischer Darstellung
- Fig. 1: einen Profilquerschnitt quer zur Profilstablängsachse mit einem vergrößerten Ausschnitt,
- Fig. 2: eine Seitenansicht des Profilstabes, dessen Profilquerschnitt in der Fig. 1 dargestellt wurde, ausschnittsweise und ebenfalls mit einem vergrößerten Ausschnitt,
- Fig. 3: zu dem Profilquerschnitt in Fig. 1 die Spannungsverteilung bei einer klassischen Biegeverformung.

Der in den Figuren dargestellte stranggepreßte Profilstab 1 aus thermoplastischem Kunststoff ist zur Aufnahme definierter Beanspruchungen bestimmt. Der Profilquerschnitt quer zur Profilstablängsachse mag im Ausführungsbeispiel unter dem Einfluß einer definierten Biegebeanspruchung mechanische Hochspannungsbereiche 2 und mechanische Niederspannungsbereiche 3 ausbilden. Insoweit wird auf die Fig. 3 verwiesen, bei der im Hochspannungsbereich 2 oben Zugspannungen und unten Druckspannungen ausgebildet sind. Der mittlere Bereich im Bereich der sog. neutralen Zone 4 ist demgegenüber ein Niederspannungsbereich 3.

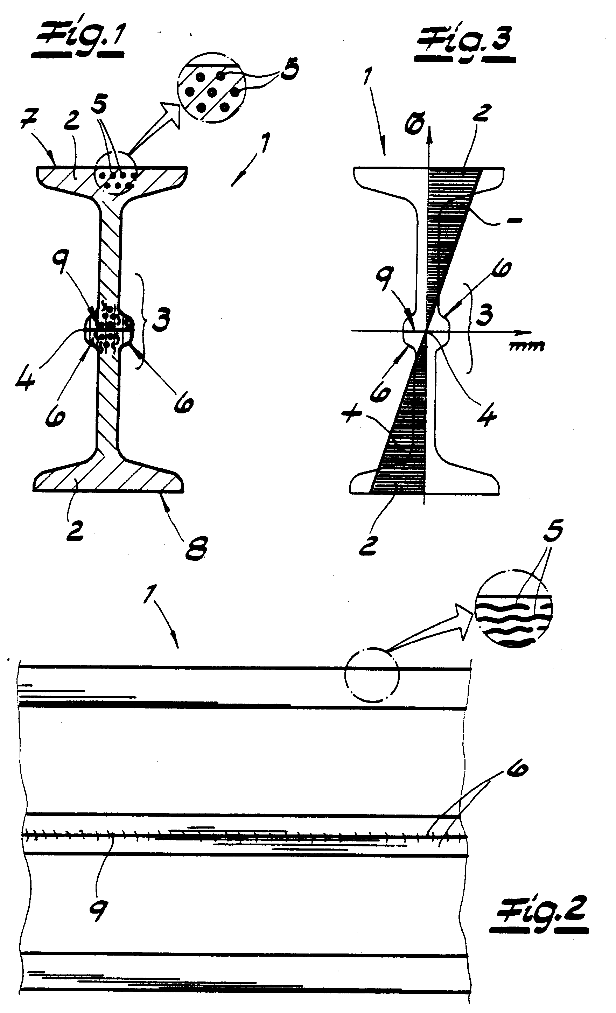

Der Profilstab 1 besitzt eine beim Strangpressen eingebrachte Langfaserbewehrung, deren Fasern eine Länge im Bereich von 3 bis 20 mm aufweisen. Dabei werden Fasern 5 mit einem hohen Elastizitätsmodul verwendet, wie es bereits angegeben wurde. Der Anteil der Langfaserbewehrung in dem Profilstab liegt im Bereich von 30 bis 70 Masse%. Insoweit, d. h. auf die bloße Masse, soll eine sehr gleichmäßige Verteilung der Fasern hergestellt werden. Aus einer vergleichenden Betrachtung der Fig. 1 und 2 entnimmt man, daß in dem Hochspannungsbereich 2 des Profilquerschnittes die Fasern 5 der Faserbewehrung hauptsächlich in Längsrichtung orientiert sind. Im Niederspannungsbereich 3 sind sie auch in Querrichtung orientiert, was in der Fig. 1 angedeutet worden ist. In bezug auf die vorzugsweise eingesetzten Werkstoffe für den Kunststoff bzw. für die Fasern wird auf die Ansprüche 2 und 3 verwiesen. Die Faserorientierung mag im Ausführungsbeispiel so gewählt sein, wie es den Ansprüchen 5 und 6 entspricht. Angedeutet wurde in der Fig. 1, daß der Profilstab 1 quer zur Längsachse Funktionsausformungen 6 in Form von leistenförmig längslaufenden Leisten aufweist, die Führungsvorsprünge oder Befestigungsvorsprünge für in das Profil einzubauende Bauteile darstellen mögen. Die durch den Wärmedehnungsquotienten ausgedrückte Orientierung der Fasern in diesem Bereich liegt bei 0,12 bis 0,5. Die Fig. 1 macht deutlich, daß der Profilstab aus zwei Halbprofilen 7, 8 zusammengeschweißt wurde. Die Schweißnaht 9 liegt im Bereich der neutralen Zone 4. Die über den Wärmedehnungsquotienten definierte Orientierung der Fasern in diesem Bereich liegt ebenfalls bei 0,3 bis 0,5.

## Patentansprüche

1. Für die Aufnahme definierter Beanspruchungen bestimmter, stranggepreßter Profilstab (1) aus thermoplastischem Kunststoff, dessen Profilquerschnitt quer zur Profilstablängsachse unter dem Einfluß der Beanspruchungen mechanische Hochspannungsbereiche (2) und Niederspannungsbereiche (3) ausbildet, und der eine beim Strangpressen eingebrachte Langfaserbewehrung aus Fasern (5) besitzt, die eine Länge im Bereich von 3 bis 20 mm und einen Elastizitätsmodul von zumindest 60.000 N/mm² aufweisen, wobei der Anteil der Langfaserbewehrung in dem thermoplastischen Kunststoff 30 bis 70 Masse % beträgt, **dadurch gekennzeichnet**, daß in dem Hochspannungsbereich (2) oder in den Hochspannungsbereichen (2) des Profilquerschnitts die Fasern (5) der Faserbewehrung hauptsächlich in Längsrichtung des Profilstabes (1) orientiert sind, daß die Fasern (5) eine Orientierung aufweisen, die ausgedrückt durch den Wärmedehnungsquotienten aus der Wärmedehnung des Profilstabs (1) in Längsrichtung im Zähler und der Wärmedehnung des Profilstabs (1) in Querrichtung im Nenner, kleiner als 0,2 ist und daß durch Anwendung des Kühldüsenextrusionsverfahrens massemäßig eine ausreichend gleichmäßige Verteilung der Fasern (5) im Profilquerschnitt fixiert ist.

2. Profilstab nach Anspruch 1, dadurch gekennzeichnet, daß der thermoplastische Kunststoff aus einem Werkstoff der Gruppe "Polyamid, Polypropylen" oder Mischungen davon oder aus einem Werkstoff der Gruppe "Polyethylenterephthalat" oder der Gruppe "Polybutylenterephtalat" oder Mischungen davon besteht.

3. Profilstab nach einem der Ansprüche 1 bis 2, dadurch gekennzeichnet, daß die Fasern (5) aus Glasfasern, Kohlenstoffasern, Metallfasern oder Mischungen davon ausgewählt sind.

4. Profilstab nach einem der Ansprüche 1 bis 3, dadurch gekennzeichnet, daß Fasern (5) verwendet werden, die einen Elastizitätsmodul von über 100.000 N/mm² aufweisen.

5. Profilstab nach einem der Ansprüche 1 bis 4, dessen Profilquerschnitt quer zur Profilstablängsachse zumindest einen Steg und zumindest einseitig an den Steg angeformte Flansche und bei klassischer Biegung im Steg eine neutrale Zone (4) aufweist, dadurch gekennzeichnet, daß die durch den Wärmedehnungsquotienten ausgedrückte Orientierung der Faser (5) in den Flanschen im Bereich von 0,12 bis 0,2 und im Bereich der Stege, zur neutralen Zone (4) hin, etwa 0,25 bis 0,5 ausmacht.

6. Profilstab nach einem der Ansprüche 1 bis 5, dessen Profilquerschnitt quer zur Längsachse Funktionsausformungen (6), z. B. leistenförmig im Profilstab (1) längslaufende Führungsvorsprünge oder Befestigungsvorsprünge, aufweist, dadurch gekennzeichnet, daß im Bereich dieser Funktionsausformungen (6) die durch den Wärmedehnungsquotienten ausgedrückte Orientierung der Fasern (5) im Bereich 0,12 bis 0,5 liegt.

7. Profilstab nach einem der Ansprüche 1 bis 6, insbesondere in der Ausführungsform als Hohlprofil, dadurch gekennzeichnet, daß der Profilquerschnitt aus zwei miteinander verschweißten Halbprofilen (7, 8) zusammengesetzt ist und im Bereich der Schweißnähte (9) die durch den Wärmedehnungsquotienten ausgedrückte Orientierung der Fasern (5) im Bereich von 0,3 bis 0,5 liegt.

8. Profilstab nach einem der Ansprüche 1 bis 7, dadurch gekennzeichnet, daß die Länge der Fasern (5) im Bereich von 3 bis 20 mm liegt.

9. Profilstab nach Anspruch 8, dadurch gekennzeichnet, daµ in der Gesamtfasermenge etwa 25 % Fasern (5) enthalten sind, die kürzer als 3 mm und/oder länger als 20 mm sind.

## Claims

1. An extruded sectional bar (1) made of synthetic thermoplastic material, which is intended to withstand defined stresses, the section cross-section of which transverse to the longitudinal axis of the sectional bar forms regions of high mechanical stress (2) and regions of low mechanical stress (3) under the effect of stress, and which has a long fibre reinforcement which is incorporated during extrusion and which comprises fibres (5) which have a length within the range from 3 to 20 mm and a modulus of elasticity of at least 60,000 N/mm², wherein the proportion of long fibre reinforcement in the synthetic thermoplastic material amounts to 30 to 70% by weight, characterised in that in the high stress region (2) or in the high stress regions (2) of the section cross-section the fibres (5) of the fibre reinforcement are mainly oriented in the longitudinal direction of the sectional bar (1), that the fibres (5) have an orientation which, when expressed as a ratio of thermal expansions in the form of the thermal expansion of the sectional bar (1) in the longitudinal direction as the numerator and the thermal expansion of the sectional bar (1) in the transverse direction as the denominator, is less than 0.2, and a satisfactorily uniform distribution of the fibres (5) within the section cross-section is fixed by employing the cooling die process.

2. A sectional bar according to claim 1, characterised in that the synthetic thermoplastic material consists of a material from the group comprising polyamide, polypropylene or mixtures thereof, or of a material of the polyethylene terephthalate group or of the polybutylene terephthalate group or mixtures thereof

3. A sectional bar according to either one of claims 1 or 2, characterised in that the fibres (5) are selected from glass fibres, carbon fibres, metal fibres or mixtures thereof.

4. A sectional bar according to any one of claims 1 to 3, characterised in that fibres (5) are used which have a modulus of elasticity greater than 100,000 N/mm².

5. A sectional bar according to any one of claims 1 to 4, the section cross-section of which transverse to the longitudinal axis of the sectional bar comprises at least one web and flanges which are integrally formed on one side of the web at least, and which during classical bending has a neutral zone (4) in the web, characterised in that, expressed as a ratio of thermal expansions, the orientation of the fibres (5) in the flanges falls within the range from 0.12 to 0.2, and is about 0.25 to 0.5 in the region of the webs towards the neutral zone (4).

6. A sectional bar according to any one of claims 1 to 5, the section cross-section of which transverse to the longitudinal axis comprises functional mouldings (6), e.g. guide projections or fixing projections in the form of beads which extend longitudinally in the sectional bar (1), characterised in that in the region of said functional mouldings (6) the orientation of the fibres (5), expressed as a ratio of thermal expansions, falls within the range from 0.12 to 0.5.

7. A sectional bar according to any one of claims 1 to 6, particularly in a form of construction as a hollow section, characterised in that the section cross-section is composed of two half-sections (7, 8) welded to each other, and in the region of the weld seams (9) the orientation of the fibres (5), expressed as a ratio of thermal expansions, falls within the range from 0.3 to 0.5.

8. A sectional bar according to any one of claims 1 to 7, characterised in that the length of the fibres (5) falls within the range from 3 to 20 mm.

9. A sectional bar according to claim 8, characterised in that the total amount of fibres contains about 25 % of fibres (5) which are shorter than 3 mm and/or longer than 20 mm.

## Revendications

1. Barre profilée (1) extrudée en matière thermoplastique, destinée à absorber des sollicitations définies, dont la section profilée forme, transversalement à l'axe longitudinal de la barre profilée des zones de fortes contraintes (2) et des zones de faibles contraintes (3) sous l'influence des sollicitations mécaniques, et qui présente une armature à fibres longues, introduite lors de l'extrusion, en fibres (5) qui présentent une longueur comprise entre 3 et 20 mm et un module d'élasticité d'au moins 60 000 N/mm², la proportion de l'armature à fibres longues dans la matière thermoplastique représentant 30 à 70 % de la masse, caractérisée en ce que dans la zone de fortes contraintes (2) ou dans les zones de fortes contraintes (2) de la section profilée, les fibres (5) de l'armature en fibres sont principalement orientées dans la direction longitudinale de la barre profilée (1), de manière que les fibres (5) présentent une orientation, qui, exprimée par le quotient de dilatation thermique résultant de la dilatation thermique de la barre profilée dans la direction longitudinale au numérateur et de la dilatation thermique de la barre profilée (1) dans la direction transversale au dénominateur, est inférieur à 0,2 et en ce que par application du procédé d'extrusion à buse froide est fixée en masse une distribution suffisamment uniforme des fibres (5) dans la section profilée.

2. Barre profilée selon la revendication 1, caractérisée en ce que la matière thermoplastique est constituée d'un matériau du groupe 〈〈 polyamide, polypropylène 〉〉 ou de mélanges de ces matériaux ou d'un matériau du groupe 〈〈 polyéthylènetéréphtalate 〉〉 ou du groupe 〈〈 polybutylènetéréphtalate 〉〉 ou de mélanges de ces matériaux.

3. Barre profilée selon l'une des revendications 1 à 2, caractérisée en ce que les fibres (5) sont choisies parmi des fibres de verre, des fibres de carbone, des fibres métalliques ou des mélanges de celles-ci.

4. Barre profilée selon l'une des revendications 1 à 3, caractérisée en ce que l'on utilise des fibres (5), qui présentent un module d'élasticité supérieur à 100 000 N/mm².

5. Barre profilée selon l'une des revendications 1 à 4, dont la section profilée présente transversalement à l'axe longitudinal de la barre profilée, au moins une âme et au moins des ailes formées sur un côté de l'âme, et en cas de cintrage classique de l'âme, une zone neutre (4), caractérisée en ce que l'orientation des fibres (5) dans les ailes exprimée par le quotient de dilatation thermique est compris entre 0,12 et 0,2 et dans la zone des âmes, vers la zone neutre (4), il est d'environ 0,25 à 0,5.

6. Barre profilée selon l'une des revendications 1 à 5, dont la section profilée présente, transversalement à l'axe longitudinal, des formations fonctionnelles (6), par exemple des saillies de guidage ou des saillies de fixation s'étendant longitudinalement dans la barre profilée (1), par exemple sous la forme de baguettes, caractérisée en ce que dans la zone de ces formations fonctionnelles (6), l'orientation des fibres (5) exprimée par le quotient de dilatation thermique se situe entre 0,12 et 0,5.

7. Barre profilée selon l'une des revendications 1 à 6, en particulier dans la forme de réalisation en tant que profilé creux, caractérisée en ce que la section profilée est constituée de deux demi-profilés (7, 8) soudés entre eux et dans la zone des cordons de soudure (9), l'orientation des fibres (5) exprimée par le quotient de dilatation thermique se situe entre 0,3 et 0,5.

8. Barre profilée selon l'une des revendications 1 à 7, caractérisée en ce que la longueur des fibres (5) est comprise entre 3 et 20 mm.

9. Barre profilée selon la revendication 8, caractérisée en ce que dans la quantité totale de fibres il y a environ 25 % de fibres (5), qui ont une longueur inférieure à 3 mm et/ou supérieure à 20 mm.
